Europäisches Patentamt

European Patent Office

Office européen des brevets

(11) Numéro de publication: **0 029 394**
**B1**

(12) **FASCICULE DE BREVET EUROPEEN**

(45) Date de publication du fascicule du brevet: **31.07.85**

(51) Int. Cl.⁴: **G 06 F 13/24,** G 06 F 13/12

(21) Numéro de dépôt: **80401649.1**

(22) Date de dépôt: **18.11.80**

(54) **Procédé et dispositif de comptabilisation et de gestion du nombre de messages constitués à la suite d'événements asynchrones émis par des appareils périphériques.**

(30) Priorité: **19.11.79 FR 7928422**

(43) Date de publication de la demande:
**27.05.81 Bulletin 81/21**

(45) Mention de la délivrance du brevet:
**31.07.85 Bulletin 85/31**

(84) Etats contractants désignés:
**DE GB IT**

(73) Titulaire: **COMPAGNIE INTERNATIONALE POUR L'INFORMATIQUE CII - HONEYWELL BULL (dite CII-HB)**
**94, avenue Gambetta**
**F-75020 Paris (FR)**

(72) Inventeur: **Miard, Pierre Victor Louis**
**10, Les Closeaux**
**F-78590 Noisy Le Grand (FR)**

(56) Documents cités:
**US-A-3 588 831**

**PROCEEDINGS OF THE IEEE, vol. 63, no. 6, juin 1975 New York US T.D. ATKINSON et al.: "Modern Central Processor Architecture", pages 863-870**
**IBM TECHNICAL DISCLOSURE BULLETIN vol. 19, no. 8, janvier 1977 New York US R.W. CALLAHAN et al.: "Masking Selected Interrupts From Selected Input/output Devices", pages 2997-2998**
**IBM TECHNICAL DISCLOSURE BULLETIN vol. 19, no. 8, janvier 1977 New York US R.W. CALLAHAN et al.: "Data Processor Real-Time Input/Output Channel", pages 3005-3011**

Courier Press, Leamington Spa, England.

**Description**

La présente invention est relative à l'agencement d'un système de commande et de contrôle des entrées et des sorties de données associé à un système de traitement de données et se rapporte particulièrement à un procédé et à un agencement permettant une gestion perfectionnée des messages émis par les dispositifs périphériques à l'occasion d'évènements fortuits survenus sur ces derniers.

Les systèmes de traitement de données comprennent généralement un système central de traitement auquel sont associés des appareils périphériques. Le dialogue entre le système central de traitement et les appareils périphériques s'effectue sous la direction d'une unité de pilotage de transfert des entrées et des sorties de données à travers ce qu'il est convenu d'appeler des canaux. Cette unité de pilotage du transfert des entrées et des sorties de données est elle-même commandée par un micro-logiciel spécialisé interne à la machine appelé firmware de manipulation des entrées sorties IOH (abréviation de Input-Output Handler) et qui sera appelé par la suite module gestionnaire des requêtes d'entrée-sortie. Au cours du déroulement des programmes logiques, à chaque fois qu'une opération d'entrée-sortie s'avère nécessaire, un module logique appelé programme canal, est exécuté sur un processeur (spécialisé ou non), c'est ce programme canal qui va commander et contrôler le fonctionnement des échanges à travers les canaux. Le programme canal une fois connecté à l'appareil périphérique concerné va poursuivre son déroulement indépendamment du déroulement des autres programmes logiques. L'appareil périphérique exécutera jusqu'à la dernière les commandes qu'il aura reçues depuis le programme canal.

Au cours de leur fonctionnement les appareils périphériques sont le siège d'évènements qui nécissitent l'arbitrage du module gestionnaire des requêtes d'entrée-sortie. Ces évènements sont de deux sorties. La première catégorie désignée par EV 1 est celle des évènements TERMINATION ou INTERMEDIATE qui sont des évènements annonçant qu'un programme canal est terminé pour TERMINATION ou qu'un programme canal a atteint une étape intermédiaire bien définie à l'intérieur du programme canal pour INTERMEDIATE. La deuxième catégorie désignée par EV 2 est celle des évènements ATTENTION qui signalent un évènement non lié à un programme canal comme par exemple, un changement opératoire intervenu sur l'appareil périphérique. C'est le cas, par exemple, quand un opérateur fait passer un appareil périphérique de READY à STANDBY par appui sur un bouton poussoir. La première catégorie est constituée d'évènements dits synchrones ou sollicités puisque leur existence est due au déroulement du programme canal. La deuxième catégorie est constituée d'évènement asynchrones ou non sollicités puisque leur apparition n'est pas la conséquence directe du déroulement d'un programme canal.

Ces évènements sont portés à la connaissance du logiciel au moyen de messages élaborés par le module gestionnaire des requêtes d'entrées-sorties.

La gestion des évènements asynchrones a fait l'objet d'un certain nombre de brevets et de diverses publications; en particulier le brevet US—A—3 588 831 "Input/Output Controller for independently supervising a plurality of operations in response to a single command", l'article des "Proceedings of the IEEE, Vol 63, No 6, June 1975 "Modern Central Processor Architecture", l'article de la revue "IBM technical Disclosure Bulletin, Vol. 19, No 8, Janvier 1977 P 3005 à 3011, "Date Processor Real Tune Input/Output Channel".

Dans le brevet US—A—3,588,831 est décrit un système de traitement de données modulaire. Le système de traitement de données proposé comporte un ou des processeurs spécialisés d'entrée-sortie. Chaque processeur d'entrée-sortie possède une mémoire privée (mémoire de contrôle) dans laquelle il range dans des emplacements réservés (boîtes aux lettres) les mots nécessaires à la gestion des opérations d'entrée-sortie qui lui ont été confiées. En particulier le contrôleur d'entrée-sortie possède trois tables (Initiation Interrupt, Terminate Interrupt, Special Interrupt) pour gérer les Interruptions survenues. Chaque interruption qui survient fait l'objet de l'enregistrement d'un mot (Interrupt Queue Table Word) qui est placée à la suite des mots déjà reçus dans la table correspondante.

La position dans la table de ce dernier mot enregistré est notée dans un compteur (Interrupt Queue Counter Word) c'est-à-dire que le contenu de ce compteur est accru d'une unité à chaque arrivée d'une interruption correspondante. En somme ce compteur sert à pointer dans la table concernée la dernière interruption faisant l'objet de l'écriture d'un mot: c'est un instrument de gestion de la table. Le contenu du compteur n'est pas utilisé à d'autre usage.

Un autre dispositif de comptage est décrit dans l'article intitulé "Modern Central Processor Architecture" publié dans la revue "Proceedings of the IEEE", volume 63, No 6, Juni 1975 dans les pages 863 et suivantes.

A la page 867 au paragraphe IX est décrit le système des SEMAPHORES. Ce système permet la synchronisation entre les processus et les "évènements" signalés au Superviseur. En particulier, les Sémaphores permettent une gestion simplifiée des requêtes de ressources effectuées auprès d'appareils périphériques. Un appareil périphérique peut être sollicité par plusieurs programmes utilisateurs et il important de connaître le nombre de ces programmes demandeurs et l'état de satisfaction de leurs demandes. Pour cela, un compteur est placé dans le sémaphore correspondant à cette ressource. A l'origine le contenu de ce compteur est nul. Chaque fois qu'un programme sollicite la ressource, le superviseur décroit le contenu du compteur d'une unité. Chaque fois que la ressource a satisfait une requête le superviseur accroît d'une unité le contenu du compteur. De la sorte, par la lecture du compteur le superviseur peut connaître le nombre de demandes en instance.

Une autre utilisation d'un dispositif de comptage dans la domaine des entrées sorties peut être illustrée par l'exemple qui suit. Un programme utilisateur demande à un périphérique l'exécution d'un programme (programme canal): par exemple l'impression d'une page de texte sur une imprimante. Ce faisant, il place le contenu du compteur à la valeur −1 pour indiquer qu'il attend une prestation de la part du périphérique. Quand le périphérique a terminé l'impression demandée il ajoute +1 au contenu du compteur qui se trouve ainsi ramené à zéro. De la sorte, en effectuant un test sur le compteur (V opération) le programme utilisateur peut connaître si l'opération demandée est terminée ou non.

Le compteur placé dans les sémaphores est un moyen pour le superviseur d'assurer l'enchainement des travaux. Dans l'article "Data Processor Real-Time Input/Output Channel" de l'IBM Technical Disclosure Bulletin Vol. 19 No 8, Janvier 1977 est décrit un dispositif permettant d'inhiber la prise en compte de certains évènements ayant leur origine au niveau de périphériques déterminés.

Cette inhibition est obtenue en plaçant des bits de masquage dans le mot d'adreesse canal (Channel Address Word). L'emplacement nécessaire pout loger ces bits de masquage est obtenu en augmentant la dimension du mot d'adresse canal qui devient le mot d'adresse canal étendu (expanded Channel Address Word).

Quand un mot de commande (UCW) est transmis à l'unité de contrôle d'un périphérique, il y a transmission des bits d'inhibition. Ces bits d'inhibition permettent à l'Unité de Contrôle de refuser les évènements correspondant aux catégories d'évènements (Attention/channel End/ Program Controlled interrupt) pour lesquels le bit d'inhibition est égal à 1.

Ce dispositif permet l'occultation des évènements se produisant sur certains appareils périphériques. Dans ce cas, les évènements sont ignorés du logiciel.

Ces documents décrivent des moyens efficaces de gestion des messages émis par les appareils périphériques. Le dernier document fournit même un moyen pour le logiciel d'ignorer certains évènements se produisant sur certains périphériques déterminés.

Le problème reste toutefois posé de la gestion des messages asynchrones dans les systèmes comportant un grand nombre d'appareils périphériques. En effet, dans ces systèmes il peut se produire qu'un nombre très élevé d'évènements asynchrones prennent naissance. Or, parmi ces évènements asynchrones, il peut arriver que certains évènements soient dus à une panne et présentent un caractère répétitif submergeant ainsi le superviseur chargé de les gérer. Cette surcharge peut se traduire par la perte d'autres évènements présentant un caractère important. Pour palier cet inconvénient, il est utile de disposer d'un moyen de gestion des évènements asynchrones qui effectue une sélection parmi le flot des évènements asynchrones incidents sans pour autant perdre la trace des évènements non sélectionnés.

A ces effet, l'invention a pour objet un procédé de gestion et de comptabilisation dans un système informatique du nombre des messages asynchrones émis par des appareils périphériques, ledit procédé ayant les caractéristiques définies dans les revendications.

Des modes de réalisation préférés de la présente invention sont decrits dans l'exposé qui suit, fait en référence aux dessins annexés à ce texte.

La figure 1 représente sous forme de bloc diagramme un système de traitement de donnés utilisant les enseignements de l'invention.

La figure 2 représente le système de traitement de données précédent dans lequel sont précisés les parcours de données reliant les appareils périphériques à l'unité de pilotage des entrées-sorties.

La figure 3 représente sous forme de bloc diagramme les parcours de données reliant des appareils périphériques à des unités de pilotage des entrées-sorties desservant séparément deux unités centrales de traitement.

La figure 4 représente la configuration d'un programme canal de type 0.

La figure 5 représente la configuration d'un programme canal de type ≠0.

La figure 6 représente la configuration d'un élément PCE d'une table d'occupation des canaux physiques PCT.

La figure 7 représente la configuration d'un élément LCE d'une table d'état des canaux logiques LCT.

La figure 8 représente la configuration d'un élément LDE de la table d'état des appareils périphériques LDT.

La figure 9 est une représentation schématique du mode d'adressage des tables LCT et d'occupation des canaux physiques et des tables LCT d'états des canaux logiques.

La figure 10 est une représentation schématique du mode d'adressage de la table LDT d'état des périphériques.

La figure 11 représente la format d'une instruction CSCT et de son opérande associé.

Les figures 12 et 13 représentent l'ordinogramme d'exécution d'une instruction CSCT.

La figure 14 représente le format d'une instruction LLPA et de la zone mémoire tampon associée.

Les figures 15 et 16 représentent l'ordinogramme d'exécution d'une instruction LLPA.

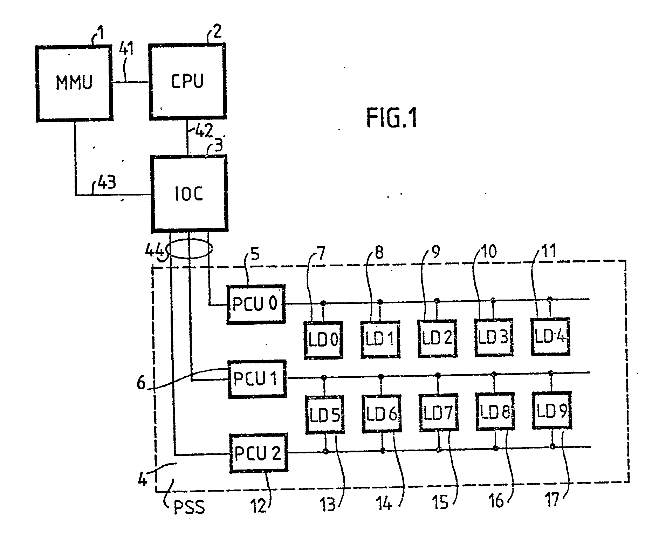

La figure 1 représente un système de traitement de données faisant application de la présente invention. Ce système est composé:

. d'une unité centrale de traitement CPU (2) (abréviation du Central Processing Unit)

. d'une mémoire principale MMU (1) (abréviation de Main Memory Unit)

. d'une unité de pilotage du transfert des entrées et des sorties de données IOC (3) (abréviation de Input-Output Control Unit)

. d'un sous système d'entrées et de sorties de données PSS (4) (abréviation de Peripheral Subsystem) comprenant des unités de pilotage des appareils périphériques PCU (5), (6), (12) (abréviation de Peripheral Control Unit) et des appareils périphériques LD (7), (8), (9), (10), (11), (13), (14), (15) (abréviation de Logical Devices).

Ces différents organes CPU, MMU, IOC et PSS sont reliés par des liaisons qui sont représentées sous forme unifilaire en (41), (42), (43), (44).

Le présent brevet concerne plus particulièrement l'unité de pilotage du transfert des entrées et des sorties de données (IOC). Cette unité IOC sert d'intermédiaire pour commander et contrôler les échanges effectués entre le sous-système d'entrées et de sorties de données PSS et d'une part la mémoire principale MMU et d'autre part l'unité centrale de traitement.

Le système de traitement de données ainsi décrit est analogue aux systèmes de traitement de données décrits abondamment dans la littérature technique, comme par exemple les ouvrages suivants:

— Microprograming Principles and Practices par Samir HUSSON (1970 Prentice Hall)
— Computer organisation and microprogramming par YAO-YAOHAN CHO (1972 Prentice Hall).

Des réalisation particulières de systèmes de commande et de contrôle des entrées et des sorties de données suivant l'art antérieur se trouvent décrites dans les brevets français 2 282 003 (dépôt de brevet US 625 665 du 24 octobre 1975) et 2 260 140 (brevet US 4 060 849 du 29 novembre 1977) déposés par la demanderesse.

Le sous-système de traitement de données est microprogrammé. Il faut entendre par là que son fonctionnement est commandé et contrôlé au moyen de microinstructions appartenant à des microprogrammes. A chaque instruction du sous-système correspond un microprogramme qui commande le déroulement des opérations nécessaires à l'exécution de l'instruction correspondante. L'ensemble des microprogrammes appartient à ce qu'il est convenu d'appeler le firmware. Le firmware comporte également un certain nombre de tables servant à enregistrer des adresses et des paramètres nécessaires au déroulement des microprogrammes.

La partie la plus fréquemment utilisée du firmware est emmagasinée dans une ou plusieurs mémoires spécialisées du type mémoire inaltérable ROS (abréviation de Read Only Storage) et/ou du type mémoire altérable WCS (abréviation de Writeable Control Storage). Cette ou ces mesures spécialisées désignées ultérieurement par les sigle CSU (abréviation de Control Store Unit) qui est celui qui lui a été donné par les concepteurs du système de traitement de données. Le reste du firmware est stocké dans une zone réservée de la mémoire principale MM. Cette zone réservée est inaccessible par les programmes utilisateurs.

La mémoire inaltérable CSU est exploitée par une unité de mise en oeuvre du firmware désignée par le sigle RCU (abréviation de Read Only Storage Control Unit). Cette unité de mise en oeuvre du firmware RCU extrait, au fur et à mesure des besoins, les microinstructions de la mémoire CSU ou de la zone mémoire réservée suivant les cas, décodifie ces microinstructions et commande à partir du résultat de ces décodifications le fonctionnement du reste de la machine.

La mémoire spécialisée CSU et l'unité de mise en oeuvre du firmware RCU ne sont pas représentées sur la figure 1.

Sur la figure 1, il a été représentée une unité centrale de traitement CPU (2), cette unité central peut comporter une multiplicité de processeurs travaillant concurremment. Ces processeurs exécutent des travaux pouvant être traités en même temps c'est-à-dire que leurs exécutions ne dépendent pas les unes des autres. Bien entendu, ces processeurs entrent en concurrence pour l'utilisation des ressources du système de traitement de l'information. Leurs conflits d'accès aux ressources sont arbitrés par le firmware avec l'aide d'un certain nombre de registres et de circuits de gestion de priorités.

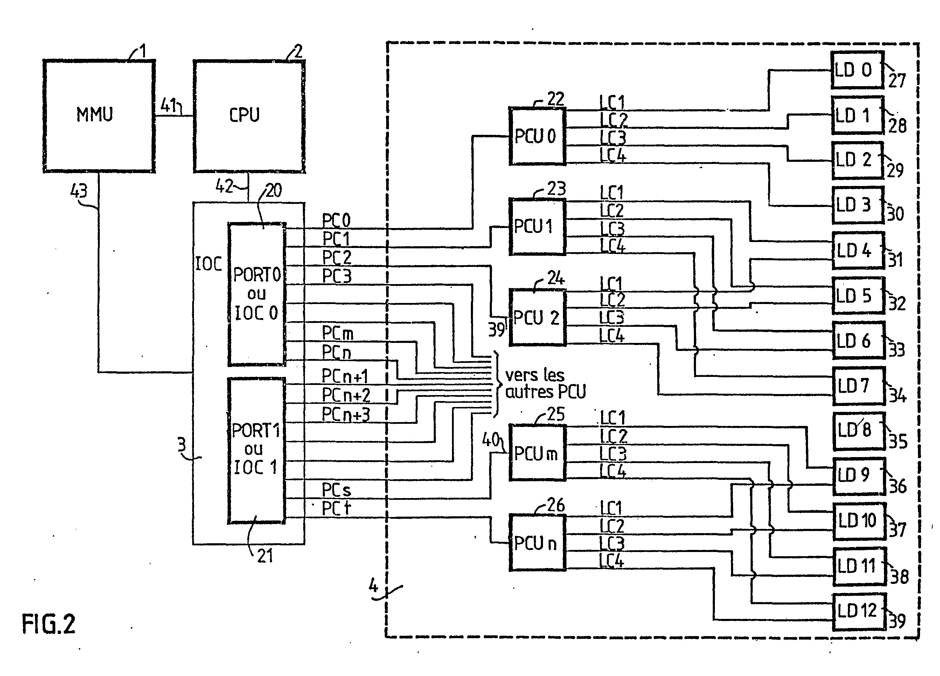

La figure 2 représente en détail le mode de raccordement de l'unité de pilotage du transfert des entrées et des sorties IOC (3) avec les unités de pilotage des appareils périphériques PCU 0 (22), PCU 1 (22), PCU 2 (24), . . ., PCUm (25), PCUn (26) avec les appareils périphériques qu'ils desservent LD 0 (27), LD 1 (28) . . . LD 12 (39). Ces précisions sont fournies car elles permettent de comprendre comment le logiciel désigne un appareil périphérique LD, qu'il désire atteindre, au moyen d'une adresse qui peut être soit la définition du parcours suivi par les données entre l'IOC et l'appareil périphérique LD soit la définition de l'appareil périphérique lui-même par son appellation LD suivi du numéro de cet appareil. Les exemples qui suivent illustrent ces modes d'adressage.

Sur la figure 2, on voit que l'unité de pilotage du transfert des entrées et des sorties IOC (3) comporte 2 unités de couplage d'entrée et de sortie de données PORT 0 (20) et PORT 1 (21) que l'on désignera également par la suite respectivement par IOC 0 et IOC 1. Ces 2 unités de couplage IOC 0 (20) et IOC 1 (21) sont reliés comme indiqué sur la figure 2 aux différentes unités de pilotage des appareils périphériques PCU 0 (22), PCU 1 (23), PCU 2 (24) . . . PCUm (25) et PCUn (26) par des liaisons appelées canaux physiques; chaque canal physique dessert une seule unité de pilotage des appareils périphériques. A chaque canal physique correspond un nombre qui est celui du rang de la borne de l'unité de couplage d'entrée et de sortie de données à laquelle elle est raccordée. De la sortie en indiquant la référence du rang de la borne de l'unité de couplage desservant un canal physique, ce dernier se trouve défini. Il est d'usage de désigner un canal physique par l'adresse PC# où le symbole # représente le rang de la borne de l'unité de couplage pour PC.

Chacune des unités de pilotage des appareils périphériques PCU 0 (22), PCU 1 (23), PCU 2 (24) . . . PCUm (25), PCUn (26) a pour mission de commander et de contrôler le fonctionnement d'un groupe d'appareils périphériques. Souvent d'ailleurs les appareils périphériques sont groupés en famille: la famille des disques magnétiques, la famille des bandes magnétiques, la famille des appareils périphériques lents. A chaque famille d'appareils périphériques correspond un type particulier d'unité de pilotage d'appareils périphériques. A chacune des unités de pilotage d'appareils périphériques sont donc associés un certain nombre d'appareils périphériques. Chacun de ces appareils périphériques est relié à l'unité de pilotage d'appareils périphériques dont il dépend à travers un dispositif d'adressage logique appelée canal logique LC (abréviation de Logical Channel). A chaque canal logique est attribué, au sein de la famille à laquelle il appartient, un numéro d'ordre et ce canal logique est désigné par l'abréviation LC suivie du numéro d'ordre qui lui est attribué. Il est à noter que le canal logique LC0 est réservé aux données échangées concernant exclusivement l'unité de pilotage de périphérique PCU.

Il ressort de ce qui précède que pour désigner un appareil périphérique le système de traitement de données n'a qu'à définir le numéro de canal physique PC= et le numéro de canal logique LC#.

Par ailleurs, comme il sera vu ci-après, il arrive que des appareils périphériques sont raccordés à plusieurs canaux physiques et logiques ou même qu'ils desservent plusieurs unités centrales de traitement. Pour cette raison, il est nécessaire de donner une référence à chaque appareil périphérique; pour cela on attribue à chaque appareil périphérique un nombre différent de celui attribué aux autres appareils périphériques. Ceci suffit pour le distinguer et on le désignera par l'appellation LD (abréviation de Logical Device) suivie du nombre attribué.

L'existence d'accès multiples sur un même appareil périphérique est visible sur la figure 2.

En effet, en examinant les liaisons aboutissant sur les appareils périphériques LD 4 (31), LD 5 (32), LD 6 (33) et LD 7 (34) on constate qu'il arrive deux liaisons par appareils périphériques LD. Aussi l'appareil périphérique LD 5 (32) reçoit la liaison LC 2 émanant de l'unité de pilotage PCU 1 (23) et la liaison LC 2 émanant de l'unité de pilotage PCU 2 (24). Cela signifie qu'il est possible d'accéder à un appareil périphérique LD par deux unités de pilotage PCU différentes: l'appareil périphérique possède un double accès.

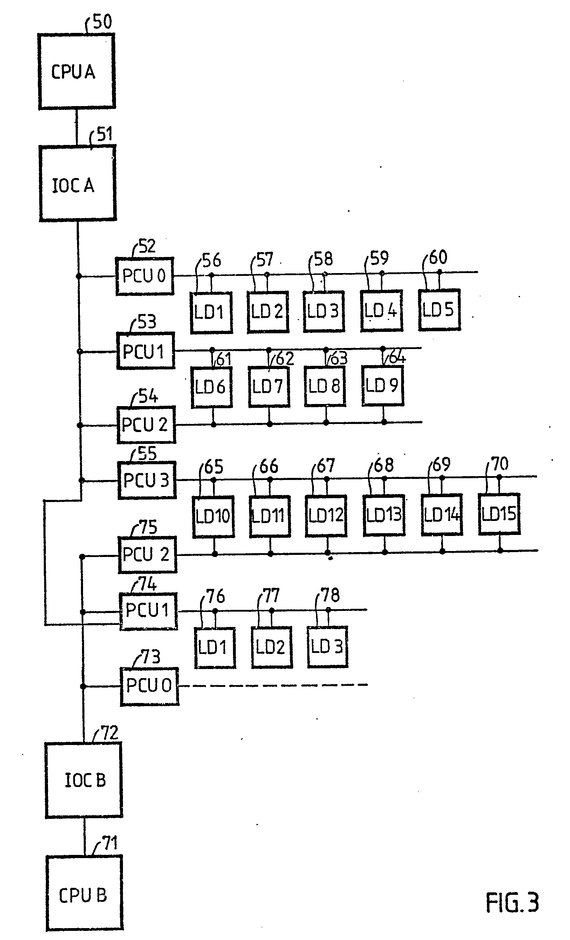

Cette possibilité de double accès peut être utilisée pour atteindre un périphérique à partir de deux unités centrales de traitement CPU comme il est représenté sur la figure 3. Sur cette figure sont représentés deux processeurs centraux CPU A (50) et CPU B (71). A chacun d'eux est associée une unité de pilotage de transfert des entrées et des sorties de données désignées par IOC A (51) et IOC B (72). L'unité de pilotage de transfert IOC A (51) est raccordée à 4 unités de pilotages des appareils périphériques désignées par PCU 0 (52), PCU 1 (53), PCU 2 (54) et PCU 3 (55). L'unité de pilotage de transfert IOC B (72) est raccordée à 3 unités de pilotage des appareils périphériques désignés par PCU 0 (73), PCU 1 (74), PCU 2 (75).

L'unité de pilotage des appareils périphériques PCU 3 (55) qui est reliée à l'unité de pilotage des transferts IOC 0 (51) est raccordée aux appareils périphériques LD 10 (65), LD 11 (66), LD 12 (67), LD 13 (68), LD 14 (69) et LD 15 (70). Ces appareils périphériques sont également raccordés à l'unité de pilotage des appareils périphériques PCU 2 (75) qui est elle-même raccordée à l'unité de pilotage de transfert IOC 1 (72). C'est l'existence d'appareils périphériques ayant des accès multiples dans un système de traitement de données qui oblige à voir un système d'adressage direct de l'appareil périphérique par son adresse LD#. En effet, quand un appareil périphérique possède un accès multiple le système de traitement de données a la possibilité de choisir un parcours de données parmi une multitude de parcours de données pour accéder à cet appareil périphérique. Cette possibilité de choix est très intéressante pour le système de traitement de données car si un parcours de données n'est pas libre ou pas disponible le système pourra essayer d'emprunter un autre parcours de données.

Pour éclairer ce que vient d'être dit, il est examiné ci-après les 2 modes d'adressage des appareils périphériques dans un système de traitement de données.

Dans le premier mode d'adressage qui est appelé mode d'adressage restreint, l'appareil périphérique LD est adressé en définissant le parcours suivi par les données en cours des échanges entre l'unité de pilotage du transfert des entrées et des sorties de données IOC et l'appareil périphérique à adresser. Ce parcours de données DP (abréviation de Data Path) est défini par le numéro du canal physique précédé des lettres PC et enfin par le numéro du canal logique précédé des lettres LC. Dans ce qui suit, le parcours de données sera désigné par PC# et LC#, le # indiquant qu'il s'agit du numéro attribué.

Le 2ème mode d'adressage qui est le mode d'adressage étendu, l'appareil périphérique est désigné directement par son appellation c'est-à- dire son numéro précédé des lettres LD. Dans ce cas l'adresse sera désignée par LD#.

Il sera vu plus loin lors de l'examen des programmes canaux comment ces deux modes d'adressage sont utilisés.

Le fonctionnement du système de traitement de

données est assuré par un ensemble de programmes logiques que l'on désigne aussi par le nom de logiciels ou logiciel de fonctionnement. A l'intérieur de ces logiciels sont inclus des programmes destinés spécialement à la commande et au contrôle des opérations d'entrée et de sortie de données. Ces programmes sont usuellement appelés programmes canaux CP (abréviation de Channel Program) pour invoquer le fait que l'une de ces programmes au cours de son exécution n'utilise qu'un seul canal.

Un programme canal CP est composé de deux parties: l'en-tête et le corps du programme canal. L'en-tête comprend un nombre fixe de mots qui contiennent des paramètres de service concernant l'exécution du programme canal. Dans la réalisation préférée de l'invention, il existe deux types de programmes canaux: les programmes canaux du type 0 et les programmes canaux de type ≠0. La différence entre ces deux types de programmes canaux réside dans le mode d'adressage de l'appareil périphérique LD.

Les programmes canaux du type 0 utilisent le mode d'adressage restreint c'est-à-dire que l'appareil périphérique adressé est défini par le parcours qui sera suivi par les données pendant le déroulement du programme canal. Ce parcours, comme il a été dit plus haut, est appelé parcours des données et est désigné par le sigle DP (abréviation de Data Path). Ce parcours est défini par le numéro de canal physique PC et le numéro de canal logique LC. Il est d'usage de désigner symboliquement ce parcours de donnée DP par la notation PC#, LC# où PC# désigne le numéro de canal physique et LC# le numéro de canal logique.

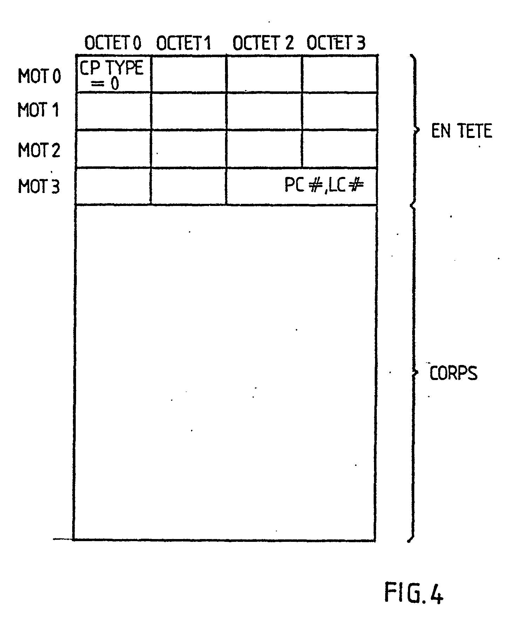

La figure 4 représente un programme canal de type 0. Les mots composant le programme canal ont une longueur de 4 octets désignés, en allant de la gauche vers la droite, par: OCTET 0, OCTET 1, OCTET 2, OCTET 3. L-en-tête du programme canal du type 0 a une longueur fixe de 4 mots désignés de haut en bas par: MOT 0, MOT 1, MOT 2, MOT 3. Seuls les paramètres nécessaires à la compréhension de la présente invention sont représentés sur la figure 4. L'OCTET 0 du MOT 0 contient un nombre nul: ce nombre nul indique que le programme canal est du type 0. Les OCTETS 2 et 3 du MOT 3 contiennent la définition du parcours de donnée DP sous la forme de 3 nombres: le numéro de canal physique PC# et le numéro de canal logique LC#.

Après l'en-tête vient le corps du programme canal qui contient une succession de blocs de commande de canal désignés par le sigle CCE (abréviation de Channel Control Entry). Ce sont ces blocs CCE qui servent à commander l'exécution des opérations faisant l'objet du programme canal.

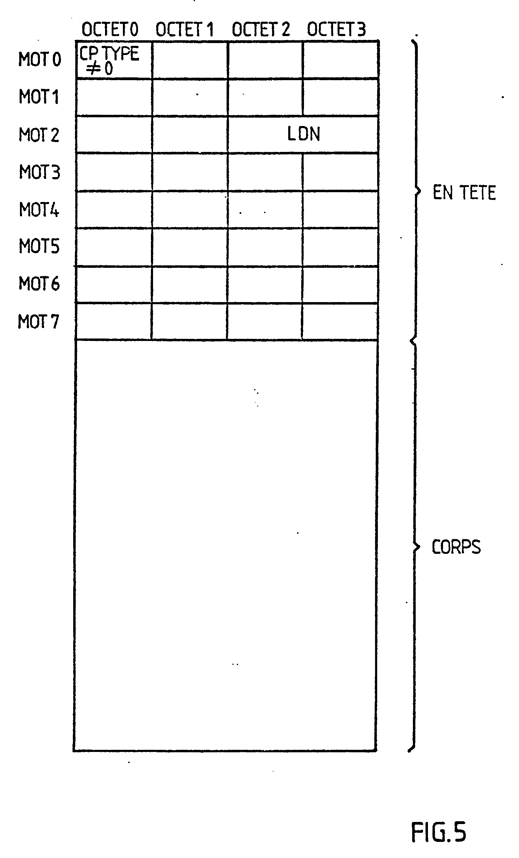

Les programmes canaux de type ≠0 représentés sur la figure 5 utilisent le mode d'adressage étendu, c'est-à-dire que l'appreil périphérique LD concerné sera désigné par un nombre le désignant directement. Ce nombre, usuellement, est représenté par le symbole LD#.

La figure 5 représente un programme canal du type ≠0. L'en-tête du programme canal de type ≠0 a une longueur fixe de 8 mots désignés par MOT 0 à MOT 7. L'octet 0 du mot 0 contient le numéro de type de Programme canal désigné par CP TYPE. Ce numéro de type de programme canal est donc dans ce cas différent de zéro. Les OCTETS 2 et 3 du MOT 2 contiennent le nombre LDN (abréviation de Logiciel Device Number) désignant l'appareil périphérique concerné par sa référence LD#.

Le corps du programme canal est de même nature que pour les programmes canaux du type 0.

Les programmes canaux sont incorporés dans les programmes de traitement de données suivant les besoins des programmes. Quand, au cours d'un déroulement d'un programme se présente une demande d'opération d'entrée-sortie de données, cela se traduit par l'exécution d'une instruction de connexions d'un appareil périphérique SIO ou CONNECT. Cette instruction comporte un opérande qui donne l'adresse en mémoire de l'origine du programme canal à exécuter, L'exécution de cette instruction SIO ou CONNECT déclenche un cycle d'opérations destinées à mettre en place l'opération d'entrée-sortie. Après identification des périphériques concernés par lecture de son adresse dans l'en-tête du programme canal, une demande d'utilisation de ce périphérique est faite au module de firmware qui gère les requêtes. Par la suite, ce module sera désigné par le nom de module gestionnaire des requêtes d'entrée-sortie.

Pour gérer les demandes d'utilisation d'appareils périphériques qui lui sont faites, le module gestionnaire utilise des tables dans lesquelles il vient noter des paramètres nécessaires à l'exécution des programmes canaux. Ces tables sont appelées Tables de Contrôle d'entrée-sortie et sont désignées par le sigle IOCT (Input Output Control Table). Il existe trois sortes de tables:

. Les tables d'activité des canaux physiques désignées par PCT 0 (abréviation de Physical Channel Table) et PCT 1. Il existe une table PCT par unité de couplage PORT: la table PCT 0 correspond à l'unité de couplage PORT 0 et la table PCT 1 correspond à l'unité du couplage PORT 1.
. Les tables d'état de canaux logiques désignées par LCT (abréviation de Logical Channel Table). Il y a une table de demande de service LCT par canal physique.
. La table d'état des appareils périphériques désignée par LDT (abréviation de Logical Device Table).

Une table d'activité des canaux physiques PCT est composée d'éléments désignés par PCE (abréviation de Physical Channel Entry). La table PCT comprend autant d'éléments PCE qu'il y a de canaux physiques.

Ce éléments PCE sont rangés dans la table dans l'ordre des numéros de canaux physiques auxquels ils sont rattachés: par exemple, le premier élément PCE de la table PCT est celui correspondant au canal physique de rang soit PC 0. Cet élément est désigné par PCE 0. L'élément suivant dans la table désignée par PCE 1, est celui correspondant au canal physique de range 1 soit PC1. Ainsi de suite jusqu'à ce que tous les canaux physiques aient un élément correspondant. Cette disposition favorise la recherche des éléments. C'est ainsi que l'adresse origine et la longueur unitaire des éléments étant connues, il est facile de trouver l'adresse de début d'un élément PCE à la seule condition de connaître en outre le numéro de canal auquel il est rattaché.

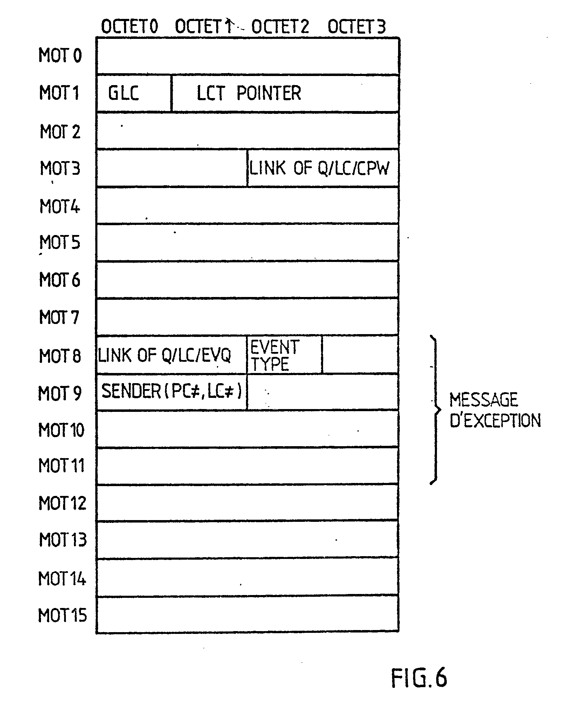

La figure 6 représente un élément PCE. Chaque élément PCE comprend 16 mots référencés MOT 0 à MOT 15, chaque mot ayant une longueur de 4 octets. Sur cet élément ne sont représentés que les paramètres nécessaires à la compréhension de la présente invention. L'octet 0 du MOT 1 désigné par GLC (abréviation de Greatest Logical Channel) représente le numéro maximul du canal logique LC# desservi par le canal physique auquel est rattaché cet élément PCE. Les octets 1, 2 et 3 du MOT 1 contiennent un pointeur qui donne l'adresse de début de la table LCT correspondant au canal physique auquel est rattaché l'élément PCE. Les octets 2 et 3 du MOT 3 contiennent un pointeur LINK OF Q/LC/CPW. Ce pointeur est dirigé vers une zone contenant l'adresse du premier programme canal à exécuter dans la file d'attente des programmes canaux Q/LC/CPW.

Les MOTS 8, 9, 10 et 11 constituent une zone réservée aux messages d'exception. Quand un incident se produit sur un appareil périphérique connecté sur un canal logique desservi par le canal physique correspondant à l'élément PCE, des paramètres relatifs à l'incident sont inscrits dans cette zone. Les octets 0 et 1 du MOT 8 contiennent l'adresse de l'évènement suivant de la file d'attente des évènements désignés par LINK OF Q/LC/EVQ (abréviation de Link Of Queue/ Logical Channel/Event Queue). Il sera vu ultérieurement comment est constituée cette file d'attente. L'octet 2 du MOT 8 contient un nombre qui définit le type d'évènement (EVENT TYPE) faisant l'objet de ce premier évènement de la file d'attente Q/LC/EVQ. Les octets 0 et 1 du mot 9 contient l'adresse du périphérique ayant été le siège de cet évènement désigné par SENDER (PC#, LC#). Cette adresse est fournie sous forme du numéro de canal physique PC# et du numéro du canal logique LC#.

Il a été vu que les octets 1, 2 et 3 du MOT 1 d'un élément PCE correspondant à un canal physique PC# contiennent un nombre qui est un pointeur LCT POINTER, celui-ci pointe vers l'origine d'une table LCT qui contient les paramètres de service des canaux logiques dépendant de ce canal physique.

Une table LCT est composé d'éléments LCE placés les uns à la suite des autres. Il y a au moins autant d'élément LCE qu'il y a de canaux logiques desservis par le canal physique correspondant au PCE qui pointe vers cette table LCT. Les éléments LCE sont placés dans l'ordre croissant des numéros de canal logique LC#. Ainsi, le premier élément correspond au canal logique de rang 0 soit LC0. Il est à noter que le canal logique O dans la réalisation de l'invention est réservé a l'adressage du contrôleur de périphérique PCU connecté au canal physique PC concerné. Chaque élément LCE est composé de 16 mots de 4 octets.

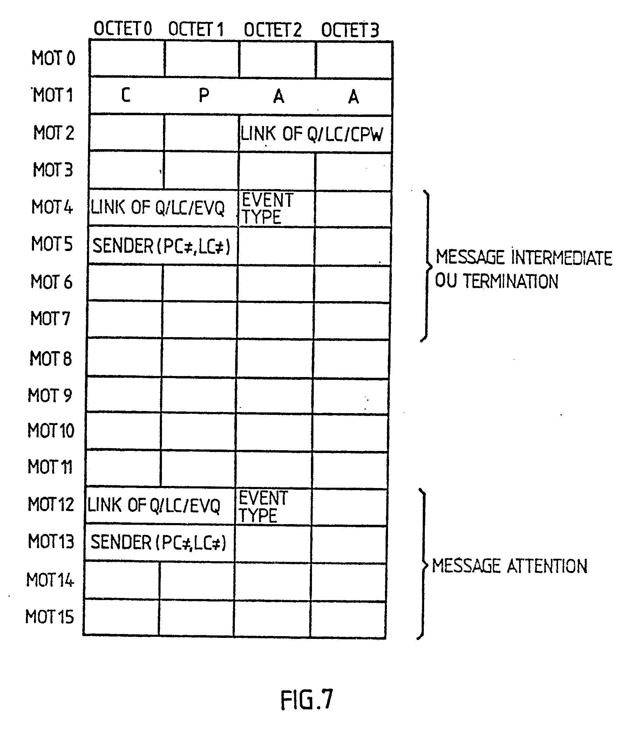

Sur la figure 7 est représente un élément LCE de la table d'état des canaux logiques LCT. Sur cette figure ne sont représentés que les paramètres nécessaires à la compréhension de la présente invention.

Le mot 1 contient l'adresse où se trouve le programme canal en mémoire principale. Cette adresse est référencée CPAA (abréviation de Channel Program Absolute Address). Cette adresse CPAA est écrite à cet emplacement par le module de gestion des requêtes lors de la demande de lancement de l'opération d'entrée-sortie. CPAA est l'adresse origine du programme canal s'étant porté candidat à l'utilisation du canal logique.

Les octets 2 et 3 du Mot 2 contiennent un lien qui permet de constituer la file d'attente de programmes canaux en attente d'exécution. Cette file d'attente est désignée par Q/LC/CPW (abréviation de Queue/Logical Channel/Channel Program Waiting). Le lien est désigné par LINK OF Q/LC/ CPW. Par lien on entend la désignation du prochain LCE de la file d'attente par les références PC#, LC#.

Les mots 4, 5, 6 et 7 servent à stocker des paramètres concernant les évènements INTERMEDIATE ou les évènements TERMINATION. Ces évènements sont des évènements liés au déroulement d'un programme canal. Un évènement INTERMEDIATE est constitué par l'arrivée à un bloc de commande de canal CCE (abréviation de Channel Control Entry) précisant qu'il faut prévenir le logiciel de son arrivée en exécution. Un évènement TERMINATE est constitué par l'exécution du dernier bloc de commande CCE d'un programme canal. Cet évènement signifie au logiciel que le déroulement du programme canal est terminé. Les octets 0 et 1 du mot 4 contiennent un lien qui permet de constituer la file d'attente Q/LC/EVQ (abréviation de Queue/Logiciel Channel/Event Queue) des évènements en attente. L'octet 2 du mot contient un nombre qui définit le type de l'évènement qui suit dans la file d'attente Q/LC /EVQ. En effet, il sera vu plus loin qu'il existe trois types d'évènements et comment sont constituées les files d'attentes des évènements en souffrance. Les octets 0 et 1 du mot 5 contiennent l'adressage sous la forme PC#, LC# de l'appareil périphérique LD où a lieu l'évènement consigné dans cet élément LCE.

Les mots 12, 13, 14 et 15 sont réservés au stockage des paramètres concernant les évènement ATTENTION. Les évènements ATTENTION sont des évènements survenant au niveau des appareils périphériques LD sans être le résultat du déroulement d'un programme canal.

C'est le cas par exemple où un opérateur par action sur une commande fait changer l'état opérationnel d'un appareil périphérique.

Les octets 0 et 1 du mot 12 contiennent un lien qui permet de constituer la file d'attente Q/LC/EVQ des évènements en attente.

L'octet 2 du mot 12 contient un nombre qui définit le type d'évènement consigné dans l'élément LCE qui suit le présent LCE dans la file d'attente Q/LC/EVQ. Cette précision est importante car comme il a été vu précédemment les évènements ne sont pas notés au même endroit suivant qu'il s'agit d'évènement INTERMEDIATE ou TERMINATION ou d'évènement ATTENTION. Il est donc nécessaire au firmware de connaître la nature de l'évènement qui suit dans la file d'attente.

Les octets 0 et 1 du mot 13 contiennent l'addresse, sous la forme PC#, LC#, de l'apparreil périphérique qui a été le siège de l'évènement consigné dans le présent LCE.

Il existe une autre table concernant les périphériques c'est la table LDT d'état des appareils périphériques, LDT est l'abréviation de Logical Device Table. Cette table LDT est composée d'éléments LDE. Il y a autant d'éléments LDE qu'il y a d'appareils périphériques. Les éléments LDE sont placés les uns à la suite des autres dans l'ordre des numéros LDN attribués aux appareils périphériques auxquels il sont rattachés. De la sorte, connaissant le numéro LDN d'un appareil périphérique, le système d'exploitation peut facilement retrouver l'élément LDE le concernant.

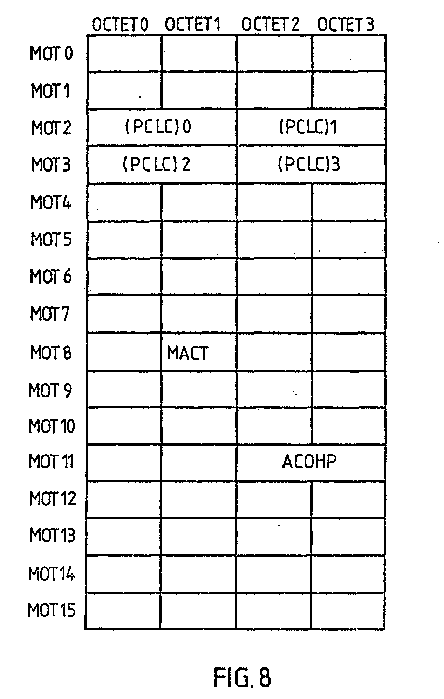

Chaque élément LDE est constitué de 16 mots de 4 octets. Sur la figure 8 il est représenté un élément LDE. Seuls les paramètres nécessaires à la compréhension de la présente invention sont représentés sur cette figure.

L'octet 2 du MOT 10 contient le nombre des évènements ATTENTION qui ont été transmis au logiciel par le système d'exploitation. Ce nombre est désigné par CACT (abréviation de Current Attention Count). Ce nombre représente la totalisation des évènements ATTENTION qui ayant été retiré des files d'attente Q/LC/EVQ par le système d'exploitation ont été communiqué au logiciel en vue de leur traitement: chaque communication d'un évènement accroîtra ce nombre d'une unité. Le système d'expoitation dispose, comme il sera vu plus loin, d'instruction lui permettant de modifier ce nombre CACT.

L'octet 1 du MOT 8 contient le nombre maximum d'évènements ATTENTION qu'il est admis de transmettre au logiciel. Ce nombre est désigné par MACT (abréviation de Maximum Attention Count). Quant le nombre d'évènements transmis CACT sera égal au nombre maximum admis MACT, le système ne pourra plus transmettre aucun message ATTENTION vers le logiciel. Le système d'exploitation dispose, comme il sera vu par la suite, d'instruction lui permettant de modifier ce nombre MACT.

Cette disposition permet au système d'exploitation de limiter le nombre d'interventions dues à des messages ATTENTION provenant d'un appareil périphérique. Ceci est indispensable dans le système multiprocesseurs où les messages ATTENTION peuvent surgir en nombres élevés. Ceci permet également dans des phases critiques de l'exploitation de suspendre momentanément le traitement des messages ATTENTION émanant de certains périphériques en rendant égal à zero le nombre maximum MACT.

Les mots 2 et 3 contiennent 4 emplacements dans lesquels peuvent être placés 4 adresses: (PCLC) 0, (PCLC) 1, (PCLC) 2 et (PCLC) 3. Un nombre variable de 1 à 4 de ces emplacements peuvent être remplis. Chaque adresse (PCLC) correspond à une définition de parcours de données sous la forme PC#, LC#. Le nombre d'emplacements contenant une définition de parcours de données (PCLC) représente le nombre d'accès possibles pour l'appareil périphérique LD correspondant à l'élément LDE. C'est-à-dire que sur l'élément LDE représenté sur la figure 8, il existe la possibilité d'avoir 4 accès pour l'appareil périphérique LD si les 4 emplacements comportent respectivement 4 adresses différentes.

Les octets 2 et 3 du mot 11 contiennent un lien ACOHP (abréviation de Attention Count Overflow Head Pointer) permettant de constituer une file d'attente Q/LC/ACO (abréviation de Queue/Logical Channel/Attention Count Overflow) des évènement ATTENTION qui n'ont pas été pris en compte par le système d'exploitation parce que les comptes d'évènement CACT transmis étaient égaux ou supérieur à la limite supérieure MACT. La file d'attente Q/LC/ACO sera vue ultérieurement.

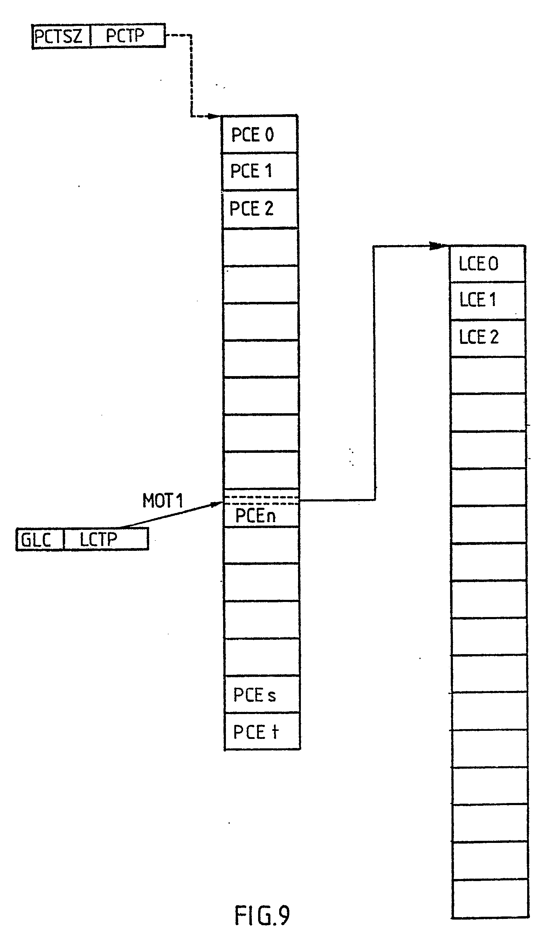

Sur la figure 9 est représentée la table d'activité des canaux physiques PCT et une table d'état de canaux logiques LCT.

Il a été vu qu'il existe une table d'activité des canaux physiques PCT. Afin de pouvoir retrouver la table PCT le firmware dispose de 1 registre. Ce registre est composé de deux parties: un nombre PCTZ (abréviation de Physical Channel Table Size) qui donne le nombre d'élément PCE contenu dans la table PCT et un pointeur PCT qui donne l'adresse de début de la table PCT.

Connaissant le numéro de canal physique PC#, le firmware peut retrouver l'élément PCE correspondant au parcours de données DP recherché. Dans le mot 1 de cet élément PCE se trouvent d'une part un pointeur LCTP qui pointe vers l'origine de la table d'état des canaux logiques LCT desservis par le canal physique PC= et d'autre part le numéro maximum de canal logique inclus dans la table LCT.

La table LCT étant localise, l'élément LCE# recherché se trouve à l'emplacement correspondant au numéro du canal logique LC#.

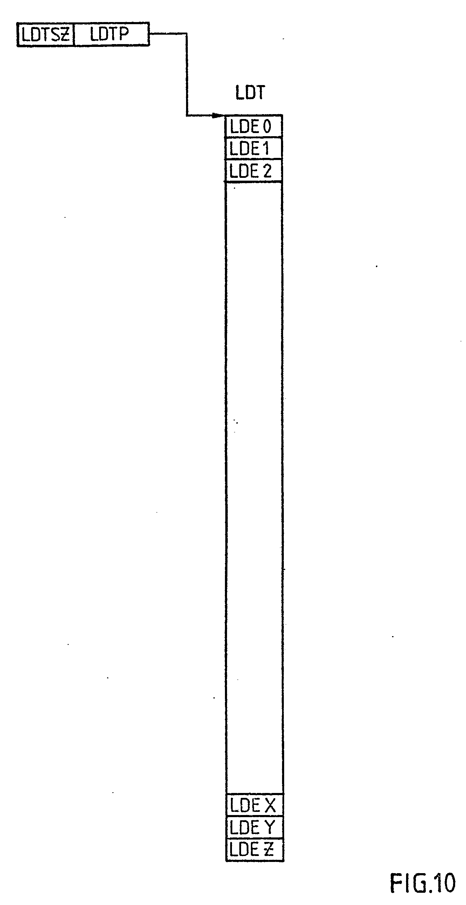

Sur la figure 10 est représentée la table d'état des appareils périphériques LDT. Pour localiser cette table, le firmware possède un registre où sont enregistrés d'une part la taille de la table LDTSZ (abréviation de LDT Size) et d'autre part un pointeur LDTP (abréviation de LDT Pointer) dirigé vers l'origine de la table. Dans cette table LDT, les éléments LDE sont rangés dans l'ordre des numéros des appareils périphériques LD#.

Les tables qui viennent d'être décrites servent au firmware à exploiter les appareils périphériques. En particulier le module gestionnaire des requêtes d'entrée-sortie se sert de ces tables pour constituer les files d'attente nécessaires à l'accomplissement des fonctions qu'il doit remplir.

La présente invention concerne la gestion des évènements ATTENTION. Ces évènements sont aussi appelés évènements ASYNCHRONES pour invoquer le fait que leur apparition n'est par liée au déroulement d'un programme canal donc n'est pas synchrone avec ce déroulement. Un tel évènement peut être occasionné soit par une action délibérée ou non de l'opérateur soit par un évènement fortuit survenant à un appareil périphérique desservi par le canal.

En fait, il existe trois types d'évènement susceptibles de frapper le fonctionnement des appareils périphériques d'un système de traitement de données. Ils sont désignés par les appellations EV 1, EV 2 et EV 3 (abréviation de EVENT de type 1, EVENT de type 2, EVENT de type 3).

Le évènement du premier type désignés par EV 1 sont les évènements dont il a déjà été question: les évènements TERMINATION et les évènement INTERMEDIATE. Ces évènements sont des évènement SYNCHRONES puisque leur apparition est liée à l'exécution de blocs de commande CCE bien déterminés des programmes canaux.

Les évènements du deuxième type désignés par EV 2 sont les évènements ATTENTION. Ces évènement asynchrones sont dus à des phénomènes se produisant au niveau des appareils périphériques LD. Par évènement asynchrones, il faut entendre des évènements non liés à l'exécution d'un bloc de commade CCE.

Les évènements du troisième type désignés par EV 3 sont les évènements survenant au niveau des canaux physiques et logiques. Ces évènements sont appelés PHYSICAL CHANNEL EXCEPTION. Ils sont considérés comme une défaillance au niveau de la liaison entre l'appareil périphérique et le processeur central. Ils subissent un traitement particulier au niveau du système qui les considère comme imputables au fonctionnement du sous-système central. Ils ne concernent pas la présente invention aussi ils ne seront plus évoqués.

Il a été vu que les évènements de type 1 (EV 1) et les évènements de type 2 (EV 2) sont des évènements qui interviennent au niveau de l'appareil périphérique LD. Dès l'apparition d'un évènement de type 1 (EV 1) ou de type 2 (EV 2), l'appareil périphérique LD qui en est le siège en informe le firmware. Le firmware ainsi alerté essaie d'informer le logiciel de la présence du ou des évènements. Si le logiciel ne peut recevoir cette information le firmware constitue une file d'attente des évènements signalés. Cette file d'attente est désignée par Q/M/S (abréviation de Queue des messages en attente sur le sémaphore S).

Pour constituer cette file d'attente Q/M/S, le firmware utilise la table d'état des canaux logiques LCT. Il a été vu lors de la description de cette table, ainsi qu'il est illustré sur la figure 7 que les éléments LCE de cette table comprennent des zones réservées aux évènements INTERMEDIATE ou TERMINATION qui sont des évènement de type 1 (EV 1) ainsi qu'aux évènements ATTENTION qui sont des évènements de type 2 (EV 2). Les mots 4, 5, 6 et 7 sont réservés aux évènements de type 1 et les mots 12, 13, 14 et 15 sont réservés aux évènements de type 2. Quand un évènement se produit dans un appareil périphérique LD, cet appareil fait connaître l'existence de cet évènement au firmware et pour s'identifier, utilise le parcours logique DP définit par son adresse PC# et LC#. Le firmware identifie l'origine du message d'évènement en notant le parcours de donnée DP qui a servi à transmettre ce message d'évènement. Il inscrit cette adresse PC#, LC# dans la zone SENDER, l'élément LCE correspondant au numéro de canal logique LC# utilisé pour la transmission du message: cette inscription se fait dans les octets 0 et 1 du mot 5 s'il s'agit d'un évènement du type 1 ou dans les octets 0 et 1 du mot 13 s'il s'agit d'un évènement du type 2.

La définition du type d'évènement est nécessaire car il a été vu que suivant le type d'incident les références sont enregistrées dans des emplacements différents de l'élément LCE (mot 5 pour les évènements de type 1 et mot 13 pour les évènements de type 2).

Au fur et à mesure que les messages d'évènements sont transmis au logiciel la file d'attente Q/M/S est mise à jour par le firmware qui fait progresser la file d'attente Q/M/S.

Dans le système de traitement de donnée faisant l'objet de la présente invention, le firmware tient la comptabilité des évènements ATTENTION transmis au logiciel. Pour cela le firmware dispose d'un compteur par appareil périphérique. Le contenu de ce compteur est augmenté d'une unité chaque fois qu'un message ATTENTION est transmis au logiciel. Comme il existe un compteur par appareil périphérique il est logique de placer ce compteur dans la table d'état LDT des appareils périphériques.

Sur la figure 8 où est représenté un élément LDE de la table d'état LDT, l'octet 2 du MOT 10 est utilisé comme compteur; ce compteur est désigné par CACT (abréviation de Current Attention Count). C'est le contenu de ce compteur CACT qui sera accru d'une unité à chaque fois qu'un message ATTENTION émis par l'appareil périphérique LC correspondant à l'élément LDE sera transmis au logiciel.

Il a été vu que ces évènements ATTENTION ne sont pas liés au déroulement d'un programme canal et c'est pour cela qu'ils sont aussi appelés évènement asynchrones. Leurs apparitions et leurs traitements par le firmware perturbent le déroulement du fonctionnement du système de traitement de données où ils ne sont pas toujours souhaités, aussi le système de traitement de données dispose d'un moyen de protection sous la forme d'une limitation du nombre d'évènements ATTENTION transmissibles au logiciel. Cette limite maximale est définie par le logiciel et se trouve définie par le contenu de l'octet 1 du mot 8 de l'élément LDE. Cette limite est désignée par MACT (abréviation de Maximum Attention Count) sur la figure 8.

Quand au cours du déroulement du fonctionnement d'un système de traitement de données les nombres d'évènements ATTENTION émis par un ou des périphériques atteignent les limites maximales MACT définies dans les éléments LDE correspondant à leur adresse LD# le firmware cesse de placer les messages ATTENTION dans la file des messages vers le logiciel Q/M/S. Pour ne pas perdre la trace de ces messages ainsi refoulés le firmware vient placer ces messages en débordement dans des files d'attente des messages en dépassement du compte maximum. Ces files sont désignées par Q/LC/ACO (abréviation de Queue/Logical Channel/Attention Count Overflow). Il existe une file d'attente Q/LC/ACO par appareil périphérique LD#.

L'origine de chaque file d'attente Q/LC/ACO est définie dans un registre situé dans l'élément LDE correspondant à l'appareeil périphérique auquel la file Q/LC/ACO est rattachée. Cette origine est désignée par ACOHP (abréviation de Attention Count Overflow Head Pointer). Ce pointeur ACOHP se trouve dans les octets 2 et 3 du MOT 11 de la LCE ainsi qu'il apparraît sur la figure 8. Ce pointeur désigne sous la forme d'une adresse PC#, LC#, l'élément LCE de la table des états des canaux logiques qui contient le premier message ATTENTION de la file d'attente Q/LC/ACO rattachée au périphérique auquel correspond l'élément LDE. Cette file d'attente Q/LC/ACO sera constituée de la même manière que les autres files d'attente en plaçant des liens qui relient les messages de la file entre eux dans l'ordre où ils devront être traités.

Il est à noter que si à un moment donné le compte CACT devient inférieur à la limite MACT, le software retirera des messages de la file Q/LC/ACO pour les placer dans la file des évènements Q/LC/EVQ.

Il vient d'être vu que le firmware comptabilise dans un compteur CACT les évènements ATTENTION au niveau de chaque appareil périphérique étant à l'origine des évènements ATTENTION. Il a également été vu que pour chaque appareil périphérique existait une limite MACT à partir de laquelle les évènements ATTENTION n'étaient plus admis dans les files d'attente Q/M/S mais étaient placés dans des files d'attente Q/LC/ACO.

Il a été vu que cette description permettait au firmware de protéger le logiciel contre un nombre d'appel ATTENTION EXCESSIF. Toutfois, à un moment donné il peut être nécessaire de changer la situation. En particulier, le logiciel peut vouloir autoriser à nouveau la transmission de messages ATTENTION pour un appareil périphérique qui se trouve en situation de débordement. Pour cela le logiciel dispose de 2 instructions: l'instruction CSCT (abréviation de Change State Count) qui lui permet de faire varier le copteur CACT et l'instruction LLPA (abréviation de Load Logical Parameter) qui lui permet de modifier la limite MACT.

Grâce à ces 2 instructions CSCT et LLPA le logiciel peut modifier la situation des messages ATTENTION. Le logiciel peut par exemple débloquer des messages ATTENTION en rendant le compte CACT inférieur à la limite MACT et ceci en réduisant le compte CACT soit en augmentant la limite MACT. Le firmware peut au contraire arrêter la transmission des messages ATTENTION pour certains appareils périphériques en amenant, par exemple, la limite MACT à la valeur zéro.

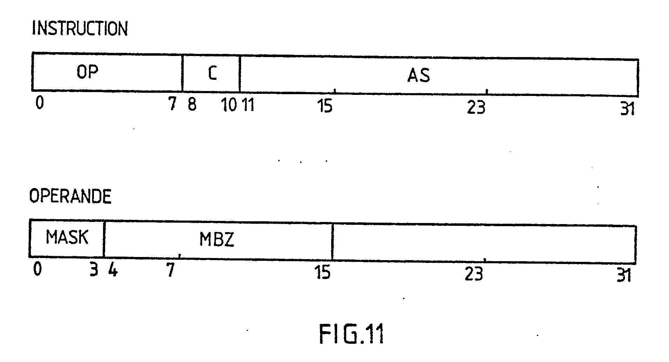

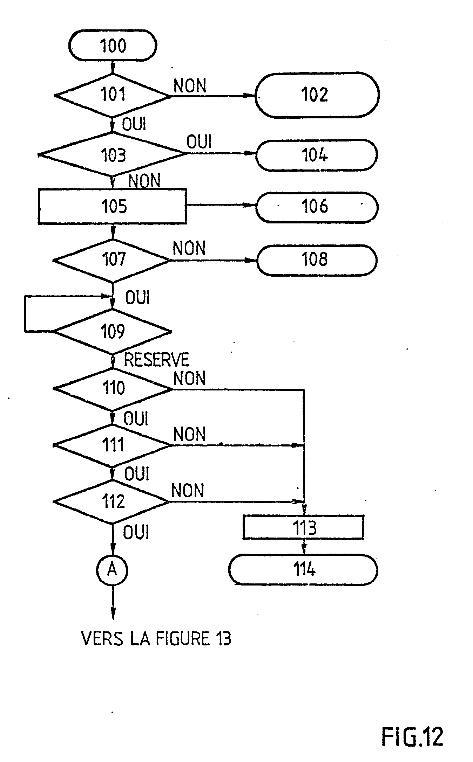

La figure 11 représente le format d'un instruction CSCT. Cette instruction comprend deux parties: l'instruction proprement dite et un opérande associé à l'instruction.

L'instruction du CSCT a une longueur d'un mot de 32 bits répartis comme suit:

— les bits 0 à 7 représentent le code opération OP
— les bits 8 à 11 représente le code complémentaire
— les bits 11 à 31 représentent l'adresse syllable qui est un pointeur dirigé vers le premier octet de l'opérande associé à cette instruction.

L'opérande a également une longueur de 32 bits répartis comme suit:

— les bits 0 à 3 représentent un masque MASK
— les bits 4 à 15 doivent être obligatoirement nuls
— les bits 16 à 31 représentent l'adresse LDN (abréviation de logical Device Number) de l'apareil périphérique concerné.

Le masque MASK est nécessité par le fait que l'instruction CSCT peut être utilisée pour modifier plusieurs compteurs que l'on désire altérer ainsi que le sens de l'altération. Par exemple, pour décroître le contenu du compteur CACT les bits 0 et 1 doivent avoir tous les deux la valeur 1. Les bits 2 et 3 concernent un autre compteur.

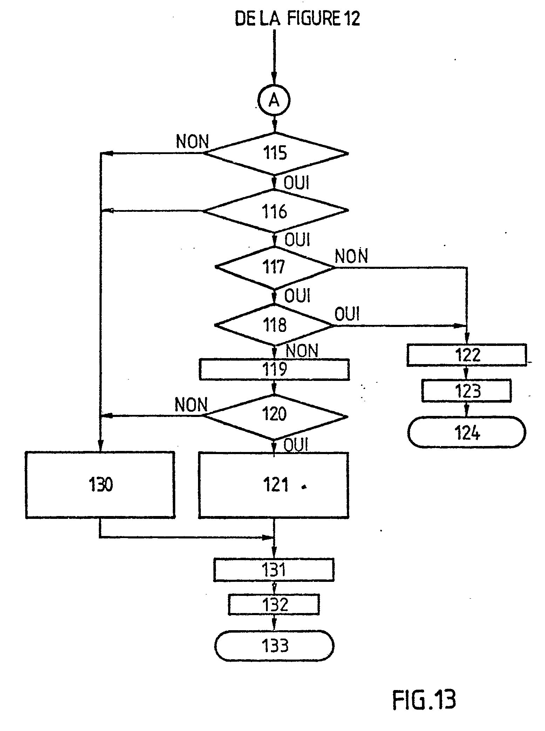

Les figures 12, 13 et 14 représentent l'ordinogramme du déroulement des opérations réalisées lors de l'exécution d'une instruction CSCT par le firmware.

En (100) est représentée l'origine de l'exécution de l'instruction CSCT.

En (101) le firmware qui a été saisi de l'exécution de l'instruction CSCT vérifie que cette instruction appartient bien à un processus "privilégié". En effet, l'instruction CSCT réservée au système d'exploitation et ne peut pas être employée par le logiciel utilisateur.

Si le résultat de cet examen est négatif, c'est-à-dire que l'instruction a été utilisée par un processus ordinaire il y a en (102) lancement d'une message d'incident pour violation de privilège (Privileged Instruction Exception).

Si le résultat de l'examen 101 est affirmatif, cela signifie que les clauses de privilège sont satisfaites et l'exécution de l'instruction se poursuit en (103) où le firmware examine si le programme canal concerné par cette instruction utilise le mode d'adressage restreint ou le mode d'addressage normal.

Si le résultat de l'examen (103 indique que le mode d'adressage est restreint, il y a en (104) émission d'un message d'incident pour format d'instruction incorrect (Illegal Format Field Exception). En effet, l'instruction CSCT concerne la table LDT des états des appareils périphériques. Cette table n'existe que pour le mode d'adressage normal et toute tentative d'utiliser cette instruction CSCT en mode restreint est vouée à l'échec.

Si le résultat de l'examen (103) indique que le mode d'adressage est le mode normal, l'exécution peut se poursuivre et en (105) le firmware va chercher en mémoire à l'adresse AS l'opérande associé à l'instruction CSCT.

Si, au cours de cet accès mémoire, il se produit une violation des protections d'accès à la mémoire il y a en (106) émission d'un message pour violation d'accès à la mémoire (memory access exceptions).

Si cet accès mémoire respecte les règles d'accès l'exécution se poursuit en (107) où le firmware vérifie que les bits 4 à 15 de l'opérande sont bien à zéro. Cette vérification est une vérification de conformité. Si au moins un des bits 4 à 15 n'est pas nul, il y a en (108) émission d'un message de non conformité de configuration (Illegal data exception).

Si tous les bits de 4 à 15 de l'opérande sont nuls, l'instruction se poursuit en (109) où le firmware prend des mesures de protection pour garantir la synchronisation des opérations qui vont suivre. En effet, dans un système multiprocesseur, il est indispensable que l'accès aux tables de système soit arbitré quand il s'agit d'apporter des modifications aux tables. Si plusieurs processeurs pouvaient concurrement modifier les tables, une confusion complète peut régner par la suite. Pour pallier cet inconvénient, l'invention dans sa réalisation préférée utilise un moyen de synchronisation qui permet à un processeur et seulement un seul, d'accéder à la fois aux tables et aux sémaphores du système pour les modifier. Ce moyen de synchronisation est constitué par un verrou d'accès SPLK (abréviation de Semaphore and Process Lock). Ce verrou fait l'objet d'une demande de brevet déposée par la demanderesse.

Les processeurs du système de traitement de l'information sont anonymes c'est-à-dire qu'ils ont des droits égaux pour accéder aux tables. Ils ne sont astreints qu'à la seule clause préalable à l'accès aux tables pour modifications que le verrou SPLK soit ouvert. Par conséquent, quand un processeur veut à la demande du firmware accéder aux tables du système pour les modifier, il doit s'assurer d'abord que le verrou SPLK est ouvert et donc autorise l'accès pour altération des tables et ensuite avant de procéder à la modification faire basculer le verrou SPLK pour interdire à un autre processeur d'entrer en concurrence avec lui pour apporter également des modifications des tables. Comme il sera vu plus loin une fois les modifications des tables effectuées, le firmware libèrera l'accès aux tables en ouvrant le verrou SPLK permettant à d'autres processeurs de poser leur candidature pour accèder aux tables aux fins de modifications.

En (109) le firmware effectue les opérations décrites ci-dessus. Dans un premier temps le firmware vérifie l'état du verrou SPLK. Si le verrou est fermé, le firmware attend qu'il s'ouvre dans la boucle "FERME". S'il est ouvert, il le verrouille pour se réserver l'usage de l'accès aux tables et l'exécution de l'instruction se poursuit en (140) où le firmware vérifie si l'élément LDTE adressé existe bien dans la table des états LDT des appareils périphériques. Si l'élément LDTE à modifier n'est pas présent il y a en (113) libération du verrou SPLK puis en (114) il y a émission d'un message d'incident d'adressage de l'appareil périphérique (Illegal LD.LD/A Exception). Si l'élément LDTE recherché existe bien l'excution de l'instruction CSCT se poursuit en (111) où le firmware vérifie que le mode d'adressage direct des appareils périphériques LD# est autorisé.

En effet, le firmware dans le mode normal c'est-à-dire ayant une table LDT peut fonctionner suivant deux modes d'adressage, le mode d'adressage par canal ou mode restreint et le mode d'adressage direct à l'appareil périphérique ou mode normal. Dans le mode d'adressage par canal bien que la table des états LDT existe, celle-ci n'est pas utilisée par le firmware qui l'ignore et qui, par conséquent, ne peut pas exécuter les instructions affectant cette table. Dans le mode d'adressage direct à l'appareil périphérique, le firmware est capable d'exécuter des instructions affectant la table LDT ainsi que d'utiliser cette table. Si l'examen (111) a un résultat négatif, c'est-à-dire que le firmware se trouve en mode d'adressage canal il y a en (113) libération de verrou SPLK et envoi en (114) d'un message d'incident d'adressage de l'appareil périphérique. Si par contre, l'examen (111) est affirmatif, c'est-à-dire que le mode d'adressage direct de l'appareil périphérique est utilisé, l'exécution de l'instruction se poursuit en (112) où le firmware vérifie que l'appareil périphérique LD. concerné se trouve en état opérationnel. Si l'appareil périphérique n'est pas opérationnel, l'examen sera négatif et le firmware exécutera les opérations (113) puis (114) décrites plus haut. Si l'appareil périphérique est opérationnel l'exécution se poursuivra en (115) qui est représenté sur la figure 13. Ici, il est nécessaire de revenir à la figure 11 où est représenté l'opérande associé à l'instruction CSCT.

Dans cet opérande, existe un masque constitué des bits 0, 1, 2 et 3. Les bits 0 et 1 concernent le compteur CACT et les bits 2 et 3 concernent un autre compteur désigné par CFCT (abréviation de Current Freeze Count). Si les bits 0 et 1 du masque sont égaux à un, l'instruction CSCT concerne le compteur CACT. Si les bits 2 et 3 du masque sont égaux à un, l'instruction CSCT concerne le compteur CFCT.

L'état du compteur CFCT conditionne la disponibilité de l'appareil périphérique concerné par l'élément LDE. Si le contenu du compteur CFCT est nul, le périphérique est disponible. Par contre, si le contenu du compteur CFCT est différent de zéro, l'appareil périphérique LD est figé, c'est-à-dire qu'aucun programme canal ne peut être rendu actif pour exécution sur ce périphérique. Ce compteur CFCT est utilisé, par exemple, par un processus qui est en attente sur un sémaphore conditionné par cet appareil périphérique.

Ce processus en faisant croître d'une unité le contenu de compteur CFCT interdira la modification de l'élément LDE concernant l'appareil périphérique.

En (115) le firmware vérifie si le bit 0 du masque se trouve à 1. Si ce bit est nul, cela signifie que l'instruction CSCT ne concerne pas le compteur CACT, dans ce cas l'instruction se poursuit en (130) où s'effectue le traitement de l'instruction pour le compteur CFCT.

Si le bit 0 du masque est égal à un, le déroulement de l'instruction CSCT se poursuit en (116) où le firmware vérifie si le bit 1 du masque est égal à un. Si le bit 1 du masque est égal à zéro, le déroulement de l'instruction se fait en (130) où se fait le traitement de l'instruction CSCT pour le compteur CFCT. Si le bit 1 du masque est égal à un, cela indique que l'instruction CSCT concerne le compteur CACT et le traitement se poursuit en (117) où le firmware vérifie que le contenu du compteur CFCT est bien égal à zéro. Si le contenu du compteur CFCT est différent de zéro, cela signifie que l'état du périphérique est figé et que par conséquent il n'est pas possible d'altérer l'élément LDE. Dans ces conditions, le déroulement de l'instruction se poursuit en (122) où le firmware libère le verrou SPLK. Ensuite en (123) le firmware positionne le code condition CC à la valeur 1 ce qui signifie que l'instruction n'a pas pu être menée à terme puisque le contenu de compteur CACT n'a pas pu être altéré, puis en (124) le déroulement de l'instruction est terminé. Si le contenu du compteur CFCT est nul cela signifie que l'élément LDE peut être modifié puisque l'état du périphérique n'est pas figé et le déroulement de l'instruction se poursuit en (118) où le firmware vérifie si le contenu du compteur CACT est nul. Si ce contenu est nul, l'instruction CSCT ne peut s'exécuter puisque cette instruction effectue la diminution d'une unité de contenu du compteur CACT. Dans cette condition, l'exécution de l'instruction CSCT se poursuit en (122) où le verrou SPLK est libéré puis en (123) où le code condition CC est mis à un et en (124) de déroulement de l'instruction est terminé. Si le compteur CACT n'est pas à zéro le déroulement de l'instruction se poursuit en (119) où le contenu du compteur CACT est diminué d'une unité. Cette opération (119) une fois terrminée, le déroulement de l'exécution se poursuit en (120) où le firmware vérifie si ce nouveau contenu du compteur CACT n'est pas inférieur à la limite MACT. Si le contenu CACT n'est pas inférieur à la limite MACT, ici se termine la partie d'exécution de l'instruction CSCT concernant le compteur CACT et l'exécution se poursuit en (130) où l'instruction CSCT se déroule au profit du compteur CFCT. Si le contenu du compteur CACT est devenu inférieur à la limite MACT le firmware en (121) prend les dispositions nécessaires pour utiliser la place devenue disponible en demandant le transfert d'un évènement en attente dans la file Q/LC/ACO vers la file Q/M/S.

Une fois cette demande de transfert exécuté, le déroulement de l'instruction se poursuit en (131) où le firmware libère le verrou SPLK, puis en (132) où le firmware positionne le code condition CC à zéro ce qui signifie que l'instruction CSCT s'est déroulée favorablement et que le compteur CACT a pu être modifié. En (133) l'exécution de l'instruction CSCT est terminée et le firmware est libéré pour passer à une autre instruction.

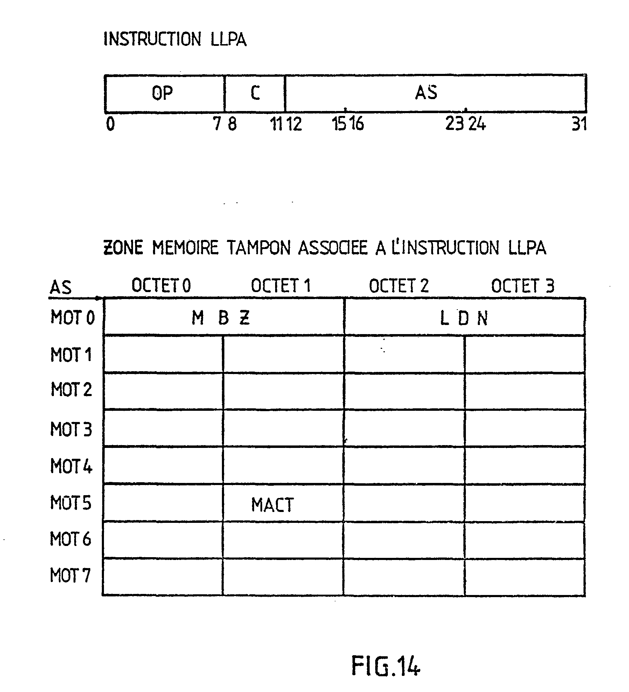

La figure 14 représente une instruction LLPA. Cette instruction est composée de 2 parties: l'instruction proprement dite et une zone mémoire tampon associée à l'instruction.

L'instruction a une longueur d'un mot de 32 bits: les bits 0 à 7 contiennent le code opération OP, les bits 8 à 11 contiennement des bits complémentaires au code instruction et le octets 12 à 31 contiennent une syllabe adresse AS qui est un pointeur vers l'origine de la zone mémoire tampon.

La zone mémoire tampon associée à l'instruction LLPA est composée de 8 mots de 4 octets chacun. Sur la figure 14 il n'a été représenté que les octets concernant directement la présente invention. L'adresse de l'octet origine de la zone mémoire tampon, c'est-à-dire l'octet 0 du mot 0, est cell donnée par la syllabe adresse AS. Les octets 0 et 1 du MOT 0 de la zone mémoire tampon doivent être obligatoirement nuls; ils sont désignés par MBZ (abréviation de Must Be Zero). Lors du déroulement de l'instruction le firmware s'assurera de l'existence de cette zone. Les octets 2 et 3 du mot 0 contiennent l'adresse de l'appareil périphérique LD= cette adresse est désignée sur la figure 14 par LDN (abréviation de Logical Device Number). Les mots 0 à 3 de la zone mémoire tampon contiennent des paramètres d'exécution de l'instruction LLPA alors que les mots 4 à 7 de la zone mémoire tampon contiennent des paramètres à transférer dans les mots 7 à 10 de l'élément LDE de la table LDT correspondant à l'adresse de l'appareil périphérique LD=: le contenu du mot 4 de la zone mémoire tampon est transféré dans le mot 7 de l'élément LDE, le contenu du mot 5 de la zone mémoire est transféré dans le mot 8 de l'élément LDE ainsi de suite, le mot 6 de la zone mémoire dnas le mot 9 de l'élément LDE et le mot 7 de la zone mémoire dans le mot 10 de l'élément LDE. Sur la figure 14 seul le paramètre MACT qui concerne la présente invention est représenté dans l'octet 1 du mot 5 où il se trouve. Quand le firmware désire modifier la limite MACT, il charge la nouvelle limite MACT dans l'octet 1 du mot 5 de la zone mémoire associée à l'instruction LLPA. Au cours de l'exécution de l'instruction LPPA la nouvelle limite MACT est chargée à la place de la limite MACT précédente.

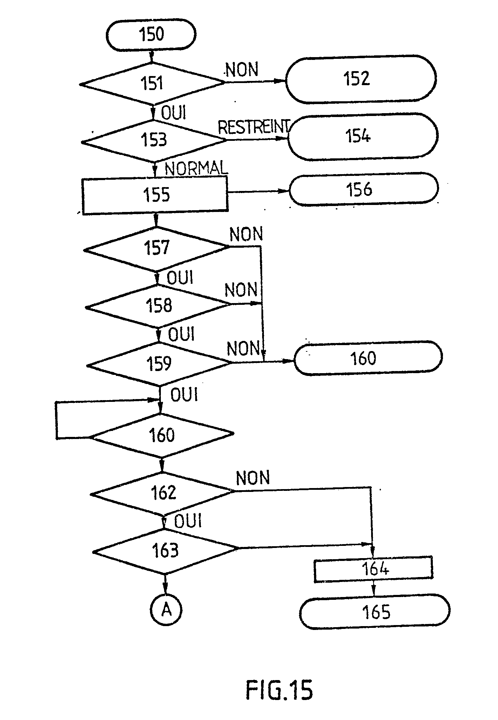

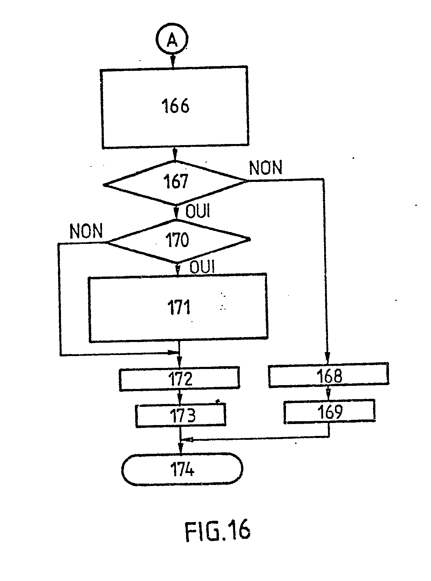

Le figures 15 et 16 représentent l'ordinogramme de l'exécution de l'instruction LLPA par le firmware.

En (150) est représentée l'origine de l'exécution de l'instruction, le firmware est mobilisé pour réaliser l'exécution de cette instruction. En (151) le firmware vérifie que cette instruction fait bien partie d'un processus priviligié. Si le résultat de cette vérification est négatif c'est-à-dire que le processus n'est privilgégié, il y a a, en (152) émission d'un message d'incident pour violation de privilège (Privileged Instruction Exception). Par contre, si le résultat de la vérification est affirmatif, l'exécution de l'instruction se poursuit en (153) où le firmware examine le mode d'adressage utilisé par le programme canal concerné: le mode d'adressage restreint ou le mode d'adressage normal. Si le mode d'adressage utilisé est le mode restreint, il y a en (154) émission d'un message d'incident pour format d'instruction incorrect (Illegal Format Field Exception). Comme il a été dit précédemment dans ce mode d'adressage la table des états des périphériques LDT n'existe pas et par conséquent, l'instruction LLPA ne peut pas être exécutée. Si le mode d'adressage utilisé est le mode normal, l'exécution de l'instruction se poursuit en (155) où le firmware va chercher en mémoire le contenu de la zone mémoire tampon associée à l'instruction LLPA. Rappelons que cette zone mémoire comprend 8 mots de 6 octets et que les quatre derniers mots de cette zone sont transférés dans l'élément LDE désigné dans le mot 0 de la zone mémoire tampon. Si au cours de cet accès mémoire il se produit une violation des droits d'accès à la mémoire un message d'incident pour violation d'accès à la mémoire (Memory access exception) est émis en (156). Si cet accès mémoire est effectué conformément aux règles d'accès l'exécution de l'instruction se poursuit en (157) où le firmware vérifie que les octets 0 et 1 du mot 0 de la zone mémoire sont bien effectivement nuls. Si la réponse est négative, c'est-à-dire que tous les bits composant ces octets ne sont pas tous nuls, le firmware émet en (160) un message pour incident de non conformité de configuration (illegal data exception). Si la réponse est affirmative, c'est-à-dire que tous les bits composant ces octets sont nuls, l'exécution de l'instruction se poursuit par les étapes (158) et (159) où le firmware vérifie la conformité de certains paramètres de contrôle à l'intérieur de la zone mémoire tampon. Si ces paramètres ne sont pas conforme, il y a en (160) émission d'un message de non conformité de configuration.

Si les paramètres contrôlés sont conformes, l'exécution de l'instruction se poursuit en (161) où le firmware teste le verrou SPLK pour savoir s'il est ouvert. Si ce verrou SPLK est fermé, le firmware se met en attente jusqu'à ce que le verrou SPLK soit ouvert. L'ouverture du verrou SPLK signifie que l'accès aux tables et aux sémaphores par le firmware est possible. Le firmware prend donc l'accès aux tables et verrouille l'accès aux tables pour interdire à tout autre processeur d'entrer en concurrence avec le processeur qu'il a élu pour exécuter l'instruction LLPA.

Une fois le verrou SPLK fermé, le firmware s'assure en (162) que l'élément LDE concerne par l'instruction LLPA existe bien. Si cet élément n'existe pas dans la table LDT, le firmware libère en (164) le verrou SPLK et ensuite en (165) émet un message d'incident d'adressage de l'appareil périphérique (Illegal LD/LD/A Exception).

Si l'élément LDE existe bien le firmware poursuit l'exécution en (163) où il vérifie que le mode d'adressage direct des appareils périphériques LD# est autorisé. Si cet adressage n'est pas autorisé, le software en (164) libère le verou SPLK et ensuite en (165) émet un message d'incident d'adressage de l'appareil périphérique. Si l'adressage direct est autorisé le software poursuit l'exécution de l'instruction en (166) sur la figure 16 en chargeant dans l'élément LDE les paramètres contenus dans la zone mémoire tampon et en particulier la nouvelle limite MACT est chargée dans l'octet 1 du MOT 8 de l'élément LDE correspondant à l'appareil périphérique désigné par son adresse LDN dans les octets 2 et 3 du MOT 0 de la zone mémoire tampon. Une fois ce chargement effectué le firmware vérifie en (167) que l'appareil périphérique en question est operationnel c'est-à-dire que pour une raison ou une autre il n'a pas été mis hors service. Si cet appareil périphérique se trouve hors service, le firmware en (168) libère le verrou SPLK et en (169) place le code condition CC à 1 pour indiquer que l'instruction a bien été exécutée mais que l'appareil périphérique n'a pas été trouve opérationnel. Enfin en (174) le firmware a terminé l'exécution de l'instruction. Si l'appareil périphérique est opérationnel le firmware vérifie en (170) si par suite de la nouvelle limite MACT le contenu du compteur CACT n'est pas devenu inférieur à la nouvelle limite MACT.

Si le contenu du compteur CACT n'est pas inférieur à la limite MACT, le déroulement de l'instruction se poursuit en (172) où le firmware libère le verrou SPLK puis le déroulement de l'instruction vient en (173) où le firmware positionne le code condition CC à un, ce qui signifie que l'exécution de l'instruction est terminée et que l'appareil a été trouvé opérationnel. Enfin, en (174) le firmware est libéré car l'exécution de l'instruction est terminée.

Si le contenu du compteur CACT est devenu inférieur à la limite MACT, le déroulement de l'instruction se poursuit en (171) où le firmware demande le retrait d'évènements en attente sur la file Q/LC/ACO s'il en existe. En effet, le fait que le compteur CACT ne déborde plus la limite MACT, il est possible de transférer des messages en attente sur la file Q/LC/ACO vers la file des messages vers le logiciel Q/M/S.

Quand ce transfert est terminé, le firmware libère le verrou SPLK en (172) ensuite le firmware en (173) positionne à zéro le code condition CC signifiant par là que l'instruction est terminée et que l'appareil périphérique LD a été trouvé opérationnel. En (174) le firmware a terminé l'exécution de l'instruction LLPA et se trouve disponible pour exécuter une autre instruction.

## Revendications

1. Procédé de gestion et de comptabilisation dans un système informatique du nombre de messages (ATTENTION) constitués par le firmware à la suite d'évènements asynchrones émis par des appareils périphériques (LD0 à LD12) reliés au système de traitement de données (1, 2, 3) dudit système informatique, lesdits messages (ATTENTION) étant destinés à être transmis par le firmware au logiciel de fonctionnement dudit système de traitement de données caractérisé en ce que pour chaque message (ATTENTION) transmis au logiciel de fonctionnement, par un appareil périphérique (LD) l'état d'un compteur (CACT) associé audit appareil périphérique (LD) est incrémenté d'une unité,

— en ce que pour chaque apparition d'un évènement asynchrone (ATTENTION) sur un appareil périphérique (LD), le firmware ayant constitué un message (ATTENTION) destiné à informer le logiciel de fonctionnement de l'existence de l'évènement asynchrone (ATTENTION) et du contexte dans lequel il s'est produit, le firmware compare le contenu du compteur (CACT) correspondant au périphérique (LD) concerné avec une valeur limite (MACT),
— en ce que si le contenu du compteur (CACT) est inférieur à la valeur limite contenue dans le registre (MACT) le firmware accroît d'une unité le contenu du compteur (CACT) pour comptabiliser ledit message asynchrone (ATTENTION) et place ce message asynchrone (ATTENTION) dans une file d'attente primaire (Q/M/S) où ce dit message asynchrone (ATTENTION) stationne jusqu'à ce que le logiciel de fonctionnement puisse le prendre en compte, cette file d'attente (Q/M/S) étant la seule accessible par le logiciel de fonctionnement en vue du dialogue avec les appareils périphériques (LD), et si le contenu du compteur (CACT) est égal ou supérieur à la valeur limite (MACT), le message asynchrone (ATTENTION) n'est pas communiqué au logiciel de fonctionnement mais placé en réserve, pour cela la firmware entrepose le message asynchrone (ATTENTION) dans une file d'attente secondaire (Q/LC/ACO) inaccessible par le logiciel où le message asynchrone stationnera aussi longtemps que le contenu du compteur (CACT) est égal ou supérieur à la valeur limite (MACT),
— et en ce que le contenu du compteur (CACT) d'évènements asynchrones (ATTENTION) peut être modifié arbitrairement par le logiciel de fonctionnement.

2. Procédé selon la revendication 1 caractérisé en ce que la valeur limite (MACT) peut être modifiée par le logiciel de fonctionnement pour y introduire une nouvelle valeur limite.

3. Procédé selon l'une des revendications 2 ou 3 caractérisé en ce que si à la suite de l'intervention du logiciel de fonctionnement le contenu du compteur (CACT) devient inférieur à la valeur limite (MACT), le firmware effectue le transfert de messages asynchrones (ATTENTION) de la file d'attente secondaire (Q/LC/ACO) vers la file d'attente primaire (Q/M/S) en accroissant d'une unité le contenu du compteur (CACT) pour chaque message asynchrone (ATTENTION) transféré, le transfert ne s'arrêtant que lorsque le contenu du compteur (CACT) atteint la valeur limite (MACT) ou lorsque la file d'attente secondaire (Q/LC/ACO) est vide.

## Patentansprüche

1. Verfahren zur Verwaltung und Abrechnung der Anzahl von Nachrichten (ATTENTION) in einem Informatiksystem, die durch die Firmware in Folge von asynchronen Ereignissen gebildet werden, welche von Peripheriegeräten (LD0 ET LD12) ausgehen, die mit dem Datenverarbeitungssystem (1, 2, 3) des Informatiksystems verbinden sind, wobei die genannten Nachrichten (ATTENTION) dazu bestimmt sind, durch die Firmware zu dem Betriebsprogrammsystem des Datenverarbeitungssystems übertragen zu werden, dadurch gekennzeichnet, daß für jede zu dem Betriebsprogrammsystem durch ein Peripheriegerät (LD) übertragene Nachricht (ATTENTION) der Zustand eines dem Peripheriegerät (LD) zugeordneten Zählers (CACT) um eine Einheit inkrementiert wird,

— daß für jedes Auftreten eines asynchronen Ereignisses (ATTENTION) an einem Peripheriegerät (LD), wobei die Firmware eine Nachricht (ATTENTION) gebildet hat, die dazu bestimmt ist, das Betriebsprogrammsystem über das Vorhandensein des asynchronen Ereignisses (ATTENTION) und den Zusammenhang zu informieren, in dem es aufgetreten ist, die Firmware den Inhalt des Zählers (CACT), welcher dem betreffenden Peripheriegerät (LD) entspricht, mit einem Grenzwert (MACT) vergleicht,
— daß die Firmware, wenn der Inhalt des Zählers (CACT) kleiner als der in dem Register (MACT) enthaltene Grenzwert ist, den Inhalt des Zählers (CACT) un eine Einheit vergrößert, un die genannte asynchrone Nachricht (ATTENTION) abzurechnen, und diese asynchrone Nachricht (ATTENTION) in eine primäre Warteschlange (Q/M/S) einfügt, wo die genannten asynchrone Nachricht (ATTENTION) verbleibt, bis sie durch das Betriebsprogrammsystem berücksichtigt werden kann, wobei diese Wartschlange (Q/M/S) die einzige durch das Betriebsprogrammsystem zugängliche für den Dialog mit den Peripheriegeräten (LD) ist, und die asynchrone Nachricht (ATTENTION), wenn der Inhalt des Zählers (CACT) gleich dem Grenzwert (MACT) oder größer als dieser ist, dem Betriebsprogrammsystem nicht mitgeteilt wird, sondern in Reserve gehalten wird, wozu die Firmware die asynchrone Nachricht (ATTENTION) in eine sekundäre Warteschlagen (Q/LC/ACO) einfügt, die für das Programmsystem unzugänglich ist und worin die asynchrone Nachricht so lange verbleibt, wie der Inhalt des Zählers (CACT) gleich dem Grenzwert (MACT) oder größer als dieser ist,

— und daß der Inhalt des Zählers (CACT) von asynchronen Ereignissen (ATTENTION) willkürlich durch das Betriebsprogrammsystem geändert werden kann.

2. Verfahren nach Anspruch 1, dadurch gekennzeichnet, daß der Grenzwert (MACT) durch das Betriebsprogrammsystem verändert werden kann, um einen neuen Grenzwert einzugeben.

3. Verfahren nach Anspruch 2 oder 3, dadurch gekennzeichnet, daß die Firmware, wenn infolge der Tätigkeit des Betriebsprogrammsystems der Inhalt des Zählers (CACT) kleiner als der Grenzwert (MACT) wird, die Überführung von asynchronen Nachrichten (ATTENTION) aus der sekundären Warteschlange (Q/LC/ACO) zu der primären Warteschlange (Q/N/S) durchführt, wobei der Inhalt des Zählers (CACT) für jede überführte asynchrone Nachricht (ATTENTION) um eine Einheit erhöht wird und die Überführung erst beendet wird, wenn der Inhalt des Zählers (CACT) einen Grenzwert (MACT) erreicht oder wenn die sekundäre Warteschlange (Q/LC/ACO) leer ist.

## Claims

1. A managing and accounting method in a data processing system for the number of messages (ATTENTION) formed by the firmware following asynchronous events transmitted by peripheral devices (LD0 to LD12) connected to the data processing system (1, 2, 3) of the said data handling system, the said messages (ATTENTION) being intended to be transmitted by the firmware to the operating system of the said data processing system, characterised in that for each message (ATTENTION) transmitted to the operating system, by a peripheral device (LD), the state of a counter (CACT) associated with the said peripheral device (LD) is incremented by one unit,

— in that for each appearance of an asynchronous event (ATTENTION) at a peripheral device (LD), the firmware having formed a message (ATTENTION) intended to inform the operating system of the presence of the asynchronous event (ATTENTION) and of the context in which it occurred, the firmware compares the contents of the counter (CACT) corresponding to the peripheral device (LD) in question with a limiting value (MACT),

— in that if the contents of the counter (CACT) amounts to less than the limiting value contained in the register (MACT), the firmware causes an increase by one unit of the contents of the counter (CACT) for rendering accountable the said asynchronous message (ATTENTION) and placing this asynchronous message (ATTENTION) in a primary queue (Q/M/S) in which this said asynchronous message (ATTENTION) remains until it can be taken into account by the operating system, this queue (Q/M/S) being the only one accessible to the operating system for the purpose of a dialog with the peripheral devices (LD), and if the contents of the counter (CACT) are equal to or exceed the limiting value (MACT), the asynchronous message (ATTENTION) is not forwarded to the operational logic system but placed on standby, for which purpose the firmware stores the asynchronous message (ATTENTION) in a secondary queue (Q/LC/ACO) inaccessible to the logic system, in which the asynchronous message will remain for as long as the contents of the counter (CACT) are equal to or greater than the limiting value (MACT),

— and in that the contents of the counter (CACT) of asynchronous events (ATTENTION) may be altered arbitrarily by the operating system.

2. A method according to claim 1, characterised in that the limiting value (MACT) may be modified by the operating system in order to introduce a new limiting value.

3. A method according to either claim 2 or 3, characterised in that if, following the intervention of the operating system, the contents of the counter (CACT) becomes below the limiting value (MACT), the firmware effects the transfer of asynchronous messages (ATTENTION) from the secondary queue (Q/LC/ACO) to the primary queue (Q/M/S) by increasing by one unit the contents of the counter (CACT) for each asynchronous message (ATTENTION) transferred, the transfer being interrupted only when the contents of the counter (CACT) reach the limiting value (MACT) or when the secondary queue (Q/LC/ACO) is empty.

FIG.1

FIG.2

FIG.3

FIG.4

|  | OCTET 0 | OCTET 1 | OCTET 2 | OCTET 3 |
|---|---|---|---|---|
| MOT 0 | CP TYPE $\neq 0$ | | | |
| MOT 1 | | | | |
| MOT 2 | | | LDN | |
| MOT 3 | | | | |
| MOT 4 | | | | |
| MOT 5 | | | | |
| MOT 6 | | | | |
| MOT 7 | | | | |

} EN TETE

} CORPS

FIG.5

|  | OCTET 0 | OCTET 1 | OCTET 2 | OCTET 3 |
|---|---|---|---|---|
| MOT 0 | | | | |
| MOT 1 | GLC | LCT POINTER | | |
| MOT 2 | | | | |
| MOT 3 | | | LINK OF Q/LC/CPW | |
| MOT 4 | | | | |
| MOT 5 | | | | |
| MOT 6 | | | | |
| MOT 7 | | | | |
| MOT 8 | LINK OF Q/LC/EVQ | | EVENT TYPE | |
| MOT 9 | SENDER (PC≠, LC≠) | | | |
| MOT 10 | | | | |
| MOT 11 | | | | |
| MOT 12 | | | | |
| MOT 13 | | | | |
| MOT 14 | | | | |
| MOT 15 | | | | |

MESSAGE D'EXCEPTION

FIG.6

6

| | OCTET 0 | OCTET 1 | OCTET 2 | OCTET 3 |
|---|---|---|---|---|
| MOT 0 | | | | |
| MOT 1 | C | P | A | A |
| MOT 2 | | | LINK OF Q/LC/CPW | |
| MOT 3 | | | | |
| MOT 4 | LINK OF Q/LC/EVQ | | EVENT TYPE | |
| MOT 5 | SENDER (PC≠,LC≠) | | | |
| MOT 6 | | | | |
| MOT 7 | | | | |
| MOT 8 | | | | |
| MOT 9 | | | | |
| MOT 10 | | | | |
| MOT 11 | | | | |
| MOT 12 | LINK OF Q/LC/EVQ | | EVENT TYPE | |
| MOT 13 | SENDER (PC≠,LC≠) | | | |
| MOT 14 | | | | |
| MOT 15 | | | | |

MOT 4 – MOT 7: } MESSAGE INTERMEDIATE OU TERMINATION

MOT 12 – MOT 15: } MESSAGE ATTENTION

FIG.7

| | OCTET 0 | OCTET 1 | OCTET 2 | OCTET 3 |
|---|---|---|---|---|
| MOT 0 | | | | |
| MOT 1 | | | | |
| MOT 2 | (PCLC)0 | | (PCLC)1 | |
| MOT 3 | (PCLC)2 | | (PCLC)3 | |
| MOT 4 | | | | |
| MOT 5 | | | | |
| MOT 6 | | | | |
| MOT 7 | | | | |
| MOT 8 | | MACT | | |
| MOT 9 | | | | |
| MOT 10 | | | | |
| MOT 11 | | | ACOHP | |
| MOT 12 | | | | |
| MOT 13 | | | | |
| MOT 14 | | | | |
| MOT 15 | | | | |

FIG. 8

| PCTSZ | PCTP |
|-------|------|

| PCE 0 |
|-------|
| PCE 1 |
| PCE 2 |
|  |
|  |
|  |
|  |
|  |
|  |
|  |
| PCEn |
|  |
|  |
|  |
|  |
| PCE s |
| PCE t |

| LCE 0 |
|-------|
| LCE 1 |
| LCE 2 |
|  |
|  |
|  |
|  |
|  |
|  |
|  |
|  |
|  |
|  |
|  |
|  |
|  |
|  |
|  |

MOT 1

| GLC | LCTP |
|-----|------|

FIG.9

| LDTSZ | LDTP |
|-------|------|

LDT

| LDE 0 |
| LDE 1 |
| LDE 2 |

| LDE X |
| LDE Y |
| LDE Z |

FIG.10

INSTRUCTION

| OP | C | AS |
|---|---|---|

0  ... 7 8 ... 10 11 ... 15 ... 23 ... 31

OPERANDE

| MASK | MBZ | |
|---|---|---|

0 ... 3 4 ... 7 ... 15 ... 23 ... 31

FIG.11

FIG.12

VERS LA FIGURE 13

FIG.13

INSTRUCTION LLPA

| OP | C | AS |
|---|---|---|
| 0        7 | 8    11 12    15 | 16            23 24          31 |

ZONE MEMOIRE TAMPON ASSOCIEE A L'INSTRUCTION LLPA

| AS | OCTET 0 | OCTET 1 | OCTET 2 | OCTET 3 |
|---|---|---|---|---|
| MOT 0 | M B Z | | L D N | |
| MOT 1 | | | | |
| MOT 2 | | | | |
| MOT 3 | | | | |
| MOT 4 | | | | |
| MOT 5 | | MACT | | |
| MOT 6 | | | | |
| MOT 7 | | | | |

FIG.14

FIG.15

FIG.16